# EUROPEAN PATENT SPECIFICATION

(11) **EP 4 109 933 B1**
(45) Date of publication and mention of the grant of the patent: **02.04.2025**
(21) Application number: 21756781.7
(22) Date of filing: 04.02.2021
(51) Int. Cl.: H04W 4/021, H04W 24/02, H04W 24/08, H04W 8/12

(54) **TERMINAL BEHAVIOR DATA OBTAINING METHOD AND APPARATUS, TERMINAL BEHAVIOR DATA SENDING METHOD AND APPARATUS, AND NETWORK DEVICE**
VERFAHREN UND VORRICHTUNG ZUM ERHALTEN VON ENDGERÄTVERHALTENSDATEN, VERFAHREN UND VORRICHTUNG ZUM SENDEN VON ENDGERÄTVERHALTENSDATEN UND NETZWERKVORRICHTUNG
PROCÉDÉ ET APPAREIL D'OBTENTION DE DONNÉES COMPORTEMENTALES DE TERMINAL, PROCÉDÉ ET APPAREIL D'ENVOI DE DONNÉES COMPORTEMENTALES DE TERMINAL, ET DISPOSITIF RÉSEAU

(30) Priority: 17.02.2020 CN 202010096966
(43) Date of publication of application: 28.12.2022
(73) Proprietor: Datang Mobile Communications Equipment Co., Ltd., Beijing 100085 (CN)
(72) Inventor: WANG, Hucheng, Beijing 100083 (CN)
(74) Representative: dompatent von Kreisler Selting Werner - Partnerschaft von Patent- und Rechtsanwälten mbB
(86) International application number: PCT/CN2021/075218
(87) International publication number: WO 2021/164562

(56) References cited:
- WO-A1-2020/001336
- WO-A1-2020/001336
- WO-A1-2020/001336
- CN-A- 110 062 375
- ORANGE ET AL: "Clarifications to Network Performance related network data analytics", vol. SA WG2, no. Reno, Nevada, United States; 20191118 - 20191122, 22 November 2019 (2019-11-22), XP051828308, Retrieved from the Internet <URL:https://ftp.3gpp.org/Meetings_3GPP_SYNC/SA2/Docs/S2-1912249.zip S2-1912249 Perf v05.docx> [retrieved on 20191122]
- ERICSSON: "Update to Expected UE behaviour related network data analytics", vol. SA WG2, no. Santa Cruz, Tenerife, Spain; 20190225 - 20190301, 19 February 2019 (2019-02-19), XP051610175, Retrieved from the Internet <URL:http://www.3gpp.org/ftp/tsg%5Fsa/WG2%5FArch/TSGS2%5F131%5FTenerife/Docs/S2%2D1901569%2Ezip> [retrieved on 20190219]
- CHINA MOBILE: "Procedure update for expected UE behavioural parameters provisioning", vol. SA WG2, no. Tenerife, Spain; 20190225 - 20190301, 19 February 2019 (2019-02-19), XP051610471, Retrieved from the Internet <URL:http://www.3gpp.org/ftp/tsg%5Fsa/WG2%5FArch/TSGS2%5F131%5FTenerife/Docs/S2%2D1901893%2Ezip> [retrieved on 20190219]
- ANONYMOUS: "3rd Generation Partnership Project; Technical Specification Group Services and System Aspects; Architecture enhancements for 5G System (5GS) to support network data analytics services (Release 16)", 3GPP STANDARD; TECHNICAL SPECIFICATION; 3GPP TS 23.288, vol. SA WG2, no. V16.2.0, 22 December 2019 (2019-12-22), pages 1 - 57, XP051840923
- ORANGE, HUAWEI, NOKIA: "Clarifications to Network Performance related network data analytics", 3GPP DRAFT; S2-1912249, vol. SA WG2, 22 November 2019 (2019-11-22), Reno, Nevada, United States, pages 1 - 6, XP051828308
- SAMSUNG: "UE data as an input for Control Plane load balancing analytics", 3GPP DRAFT; S2-2000873, vol. SA WG2, 7 January 2020 (2020-01-07), Incheon, KR, pages 1 - 2, XP051842927
- SPIRENT COMMUNICATIONS, NEC, CONVIDA WIRELESS, CATT, HUAWEI, CHINA MOBILE: "UE mobility analytics modification", 3GPP DRAFT; S2-1907145, vol. SA WG2, 28 June 2019 (2019-06-28), Sapporo, Japan, pages 1 - 3, XP051752118

## Description

### TECHNICAL FIELD

The present disclosure relates to the field of radio technologies, and in particular to a method of obtaining user equipment behavior data, and an apparatus.

### BACKGROUND

In the related art, behavior information collection and event monitoring of single user equipment (UE) require a clear indication of an identifier of the user equipment or an identifier of a group to which the user equipment belongs. When it is necessary to perform event monitoring on behaviors of all UEs in a designated area, the event monitoring side cannot know which UEs exist in the designated area, so it is impossible to monitor all UEs in the area.

The 3rd generation partnership project (3GPP) puts forward the need to analyze information of all UEs in a designated area of the network, such as abnormal behavior analysis, which requires the network data analytics function (NWDAF) to collect behavior information and monitor events of all UEs in a designated area, and then identify abnormal user equipment behaviors. However, the method of collecting behavior information and event monitoring of single UE in related art cannot realize the obtaining of the behavior information of all UEs in a designated area.

ORANGE ET AL: "Clarifications to Network Performance related network data analytics", 3GPP DRAFT; S2-1912249 discusses network performance related network data analytics, input data, output analytics and procedures.

WO 2020/001336A1 provide an information processing method and device, for use in providing terminal behavior information expected by a network side.

### SUMMARY

The purpose of the present disclosure is to provide a method of obtaining user equipment behavior data, and an apparatus, so as to solve the problem in the related art that user equipment behavior information of all UEs in a designated area cannot be obtained.

The invention is set out in the appended set of claims.

The above-mentioned technical solutions of the present disclosure have at least the following beneficial effects.

Using the obtaining method described in some embodiments of the present disclosure, the data collection network function entity determines the network function entity serving the designated area according to the designated area, and sends a data collection request to the network function entity serving the designated area, thus the behavior data of all UEs in the designated service area can be requested, so as to solve the problem in the related art that it is impossible to monitor all the UEs in the designated area.

### BRIEF DESCRIPTION OF THE DRAWINGS

Fig. 1 is a schematic flowchart of a method of obtaining user equipment behavior data according to an embodiment of the present disclosure;
Fig. 2 is a schematic flowchart of implementation 1 of the method according to some embodiments of the present disclosure;
Fig. 3 is a schematic flowchart of implementation 2 of the method according to an unclaimed example of the present disclosure;
Fig. 4 is a schematic flowchart of implementation 3 of the method according to some embodiments of the present disclosure;
Fig. 5 is a schematic flowchart of a method of sending user equipment behavior data according to an unclaimed example of the present disclosure;
Fig. 6 is a schematic structural diagram of a network device according to an unclaimed example of the present disclosure;
Fig. 7 is a schematic structural diagram of a network device according to an unclaimed example of the present disclosure;
Fig. 8 is a schematic structural diagram of an apparatus of obtaining user equipment behavior data according to some embodiments of the present disclosure;
Fig. 9 is a schematic structural diagram of an apparatus of sending user equipment behavior data according to an unclaimed example of the present disclosure.

### DETAILED DESCRIPTION

In order to make the technical problem to be solved, the technical solutions and advantages of the present disclosure clearer, the present disclosure will be described in detail below with reference to the drawings and specific embodiments.

In the related art, the behavior information collection and event monitoring of a single user equipment (UE) require a clear indication of the identifier of the user equipment or the identifier of the group to which the user equipment belongs.

For example, when performing UE event monitoring, the UE event monitoring is mainly used by the monitoring party to obtain event reports of a specified UE, such as location report and loss of connectivity, from the 5G core network (5GC). Based on the type of monitored event, the monitoring party can send an event report subscription request to a corresponding 5G network function. The monitoring party needs to search the Unified Data Manager (UDM) based on the identifier of the target UE to determine the 5GC network function (NF) currently serving the UE, such as the access and mobility management function (AMF), or the session management function (SMF). In addition, the monitoring party needs to clearly indicate the identifier of the target UE when sending to the 5GC the subscription request for the event report. The subscription request may also carry the type of the event report, the manner of reporting the event, etc. Based on these, the 5GC NF sends an event report to the monitoring party according to each subscription request.

For another example, for UE behavior data collection, in a 5G network that supports big data analysis, a network data analytics function (NWDAF) can collect UE behavior information, such as UE mobility information, from the 5G network. When the NWDAF collects UE behavior data, it first needs to clearly know the target of data collection and the network function that provides the data. The target of data collection is usually identified by the user equipment identifier (UE ID) or the user equipment group identifier (UE group ID); the network function that provides data is determined by the NWDAF based on the type of data, and then the NWDAF searches the UDM for the specific 5G network function serving the UE. The NWDAF sends an event subscription request to the specific 5G network function to collect UE behavior data, and clearly indicates the identifier of the target UE. As a result, the specific 5G network function sends the behavior data of the specified UE to the NWDAF according to each subscription request.

In addition, in the related art, the network exposure function (NEF) is allowed to send to the network an event subscription request directed to any user equipment, but the event subscription request is directed to all UEs in the operator's network and does not allow subscription to events of UEs in a specific area.

Therefore, according to the above, the data requester's event subscription request directed to any user equipment is mainly used to request the mobile network to report events of all UEs in the network, and cannot achieve data collection and event reporting related to all UEs in a designated area; the collection of UE behavior information and the UE event monitoring in the related art need to clearly indicate the identifier of the user equipment or the identifier of the group to which the user equipment belongs. When the event monitoring of all user equipment in a designated area is required, the event monitor cannot know which UEs exist in the designated area, so it is impossible to monitor all UEs in the designated area. In order to solve the above problem, some embodiments of the present disclosure provide a method of obtaining user equipment behavior data. By determining a network function entity based on a designated area, a data collection request can be sent to the network function entity serving the designated area so as to request behavior data of all UEs in the designated service area, thereby solving the problem in the related art that it is impossible to monitor all the UEs in a designated area.

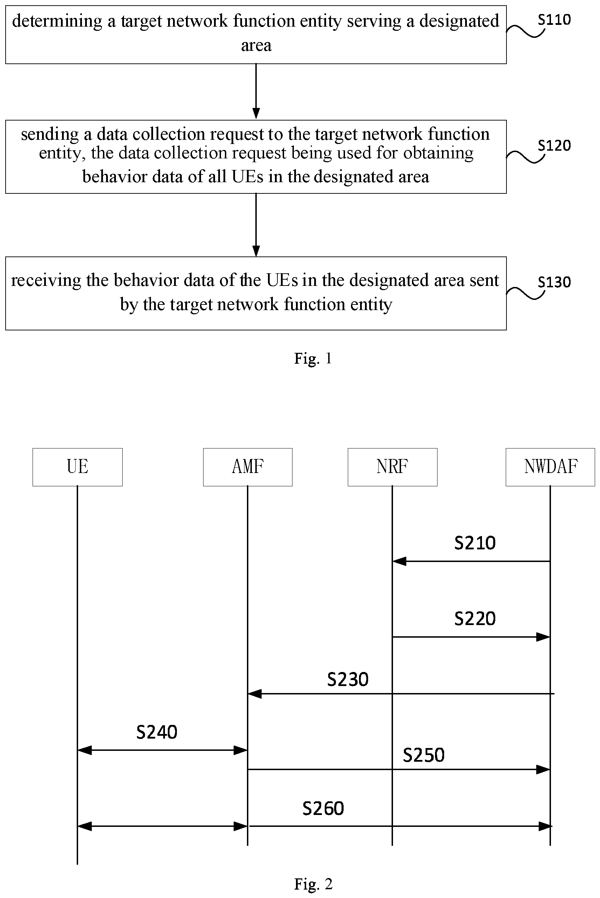

An embodiment of the present disclosure provides a method of obtaining user equipment behavior data, which is performed by a data collection network function entity. As shown in Fig. 1, the method includes following steps:
S110, determining a target network function entity serving a designated area;
S 120, sending a data collection request to the target network function entity, the data collection request being used for obtaining behavior data of all UEs in the designated area;
S 130, receiving the behavior data of the UEs in the designated area sent by the target network function entity.

Using the obtaining method described in this embodiment, the data collection network function entity determines the network function entity serving the designated area based on the designated area, and sends a data collection request to the network function entity serving the designated area, thus behavior data of all UEs in the designated area can be requested, so as to solve the problem in the related art that it is impossible to monitor all UEs in a designated area.

In some embodiments of the present disclosure, optionally, the data collection network function entity is a network data analytics function (NWDAF) entity in the 3GPP.

Optionally, the designated area is any area in the operator's network.

Further, in step S110, the determining the target network function entity serving the designated area includes:
sending a network function query request to a network repository function (NRF) entity, wherein the network function query request is used for querying the target network function entity serving the designated area;
receiving a response message sent by the NRF entity, the response message being used for indicating the target network function entity.

Optionally, the network function query request includes a location information list used for indicating the designated area, that is, identifier of the designated area in the network function query request needs to be converted into a location information list.

Using the above method, when the NWDAF entity needs to collect the behavior information of all UEs in a designated area, the NWDAF entity firstly queries the NRF entity for the target network function entity serving the designated area, wherein the query request includes location information for indicating the designated area, such as tracking area list; and then the NRF entity determines the specific network function (NF) or NF list that may serve the designated area based on the service areas of network functions (NFs), and replies to the NWDAF with determined network functions, that is, the target network function entities.

It is noted that the NWDAF entity, NRF entity, AMF entity and SMF entity, etc. mentioned in some embodiments of the present disclosure are logical units for implementing corresponding functions.

Further, in step S120, the data collection network function entity sends a data collection request to each target network function entity, to request behavior data of all UEs in the designated area;
wherein, optionally, the data collection request includes a location information list used for indicating the designated area, and the requested UEs are indicated as all UEs in the designated area.

In addition, in step S130, the receiving the behavior data of the UEs in the designated area sent by the target network function entity includes:
receiving separately the behavior data of each user equipment in the designated area sent by the target network function entity.

Further, after step S130, the method further includes:
receiving behavior data of UEs moving into and/or moving out of the designated area sent by the target network function entity;
determining the behavior data of all UEs in the designated area.

Based on the above process, the target network function entity determines each user equipment located in the designated area based on the designated area in the data collection request, determines the corresponding behavior data, and sends the behavior data of each user equipment in the designated area to the data collection network function entity.

Therefore, for the UEs moving into and/or moving out of the designated area, the target network function entity needs to conduct further monitoring, and send the behavior data of the UEs moving into and/or moving out of the designated area to the data collection network function entity, so that the data collection network function entity can finally determine the behavior data of all UEs in the designated area based on the behavior data of the UEs moving into and/or out of the designated area.

Optionally, after the user equipment moves out of the designated area, the target network function entity stops obtaining the behavior data of the user equipment; after the user equipment moves into the designated area, the target network function entity starts to obtain the behavior data of the user equipment.

By adopting the above implementation, even if the UEs in the designated area change, the data collection network function entity can dynamically obtain the behavior data of the changing UEs in the designated area in real time, thereby solving the problem in the related art that it is impossible to dynamically adjust the data collection or event monitoring objects.

In some embodiments of the present disclosure, in one implementation, the behavior data is mobility event data, and the target network function entity is an AMF entity; in another implementation, the behavior data is session management event data, and the target network function entity is a session management function (SMF) entity.

In yet another implementation, the behavior data may also be event subscription data of the user equipment.

It is noted that the behavior data obtained by the data collection network function entity is not limited to the above-mentioned, and will not be further described separately here.

For example, in one implementation, when the behavior data is mobility event data, and the target network function entity is an AMF entity, the specific process of the method of obtaining user equipment behavior data according to some embodiments of the present disclosure is adopted, as shown in Fig. 2, wherein the data collection network function entity is an NWDAF entity, and the method includes following steps:
S210, the NWDAF sends a network function query request to an NRF, wherein the network function query request indicates a designated area through a location information list;
S220, the NWDAF receives a response message sent by the NRF, the response message being used for indicating the target network function entity; wherein, the NRF determines the network function (NF) of each location information in the location information list based on the service areas of network functions (NFs), and replies to the NWDAF with determined network functions, that is, the determined AMF;
S230, the NWDAF sends a data collection request to the determined AMF, wherein the data collection request includes a location information list used for indicating a designated area, and the target user equipment is identified as all UEs;
S240, the AMF monitors each user equipment in the designated area;
S250, the AMF sends the mobility event data of each user equipment in the designated area to the NWDAF;
S260, the AMF monitors the UEs moving into and/or moving out of the designated area, and sends the mobility event data of the UEs moving into and/or moving out of the designated area to the NWDAF.

In some embodiments of the present disclosure, optionally, when the AMF performs data reporting, an association identifier needs to be carried in each mobility event report message, and the association identifier is used to associate the event report with the data collection request sent by the NWDAF.

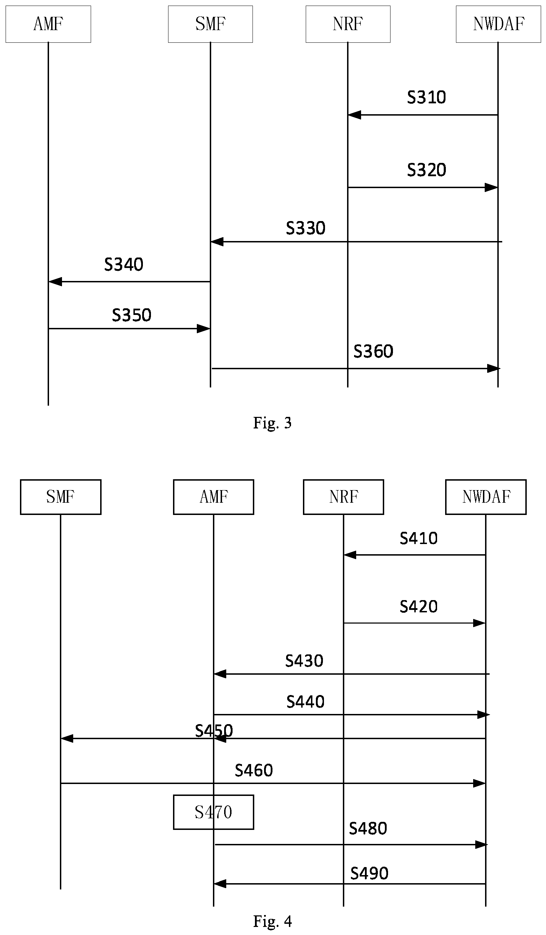

In another implementation, when the behavior data is session management event data, and the target network function entity is an SMF entity, the specific process of the method of obtaining user equipment behavior data according to an unclaimed example of the present disclosure is adopted, as shown in Fig. 3, wherein the data collection network function entity is an NWDAF entity, and the method includes following steps:
S310, the NWDAF sends a network function query request to the NRF, wherein the network function query request indicates a designated area through the location information list;
S320, the NWDAF receives the response message sent by the NRF, the response message being used for indicating the target network function entity; wherein the NRF determines the network function (NF) of each location information in the location information list based on the service areas of network functions (NFs), and replies to the NWDAF with the determined network functions, that is, the determined SMF;
S330, the NWDAF sends a data collection request to the determined SMF, wherein the data collection request includes a location information list used for indicating a designated area, and the target user equipment is identified as all UEs;
S340, based on the user equipment identifiers of all UEs indicated in the data collection request, the SMF sends to the serving AMF of each user equipment a request for subscribing for user equipment information, so as to obtain the location information report of each user equipment; wherein the request for subscribing for user equipment information further includes the location information list used for indicating the designated area, which instructs the AMF to report the user equipment's moving into and/or moving out of the designated area;
S350, the AMF reports the user equipment information of the UEs currently located in the designated area to SMF, and continuously reports the UEs moving into and/or moving out of the designated area;
S360, the SMF determines the UEs in the designated area according to the user equipment information reported by the AMF, and sends the session management event data of the UEs in the designated area to the NWDAF according to the data collection request sent by the NWDAF to the SMF.

Optionally, when the SMF performs data reporting, each mobility event report message needs to carry an association identifier, wherein the association identifier is used to associate the event report with the data collection request sent by the NWDAF.

Further, in the step S360, when the SMF receives from the AMF the report of the user equipment moving into and/or moving out of the designated area, the SMF adjusts the UEs reported to the NWDAF, specifically:
when a user equipment moves into the designated area, the SMF additionally reports session management event data of the user equipment to the NWDAF;
when a user equipment moves out of the designated area, the SMF stops reporting session management event data of the user equipment to the NWDAF.

In the method of obtaining user equipment behavior data described in the above two implementations, the NWDAF queries the NRF for the network function serving the designated area, such as an AMF or SMF; then the NWDAF sends a data collection request to the determined network function AMF or SMF, to instruct it to obtain the behavior data of all UEs in the designated area; AMF or SMF determines the UEs in the designated area based on the data collection request, monitors the UEs moving into and/or moving out of the designated area, and reports the behavior data of the UEs in the designated area to the NWDAF.

In the method of obtaining user equipment behavior data according to another embodiment of the present disclosure, with reference to Fig. 1, after the target network function entity serving the designated area is determined in step S110, the method further includes:
sending a user equipment query request to an access and mobility management function (AMF) entity of the designated area, the user equipment query request being used for obtaining a list of identifiers of the UEs in the designated area;
obtaining, from the AMF entity, the list of identifiers;
wherein, in the step S 120 of sending the data collection request to the target network function entity, the data collection request includes the list of identifiers.

Using the method of obtaining user equipment behavior data in this embodiment, after the data collection network function entity determines the target network function entity in the designated area, the data collection network function entity sends to the AMF a user equipment query request directed to the user equipment in the designated area, and the AMF feeds back with the list of identifiers of the UEs in the designated area based on the user equipment query request, and the data collection network function entity sends a data collection request to the target network function entity based on the list of identifiers.

Optionally, in this embodiment, after obtaining, from the AMF entity, the list of identifiers, the method further includes:
receiving a report sent by the AMF entity after it is determined by the AMF entity that the list of identifiers of the UEs in the designated area has changed.

Specifically, based on the user equipment query request sent by the data collection network function entity, the AMF monitors the UEs moving into and/or moving out of the designated area, and sends to the data collection network function entity a report that the list of identifiers of the UEs has changed.

For example, as shown in Fig. 4, wherein the data collection network function entity is an NWDAF entity, when the NWDAF determines that it needs to monitor the behavior of all UEs in a designated area, the method includes following steps:
S410, the NWDAF sends a network function query request to the NRF, wherein the network function query request indicates a designated area through a location information list;
S420, the NWDAF receives the response message sent by the NRF, the response message being used for indicating the target network function entity; wherein, based on the service areas of network functions (NFs), the NRF determines the specific network function (NF) or NF list that may serve the designated area, and replies to the NWDAF the determined network functions, including determined AMF and/or SMF;
S430, the NWDAF sends a user equipment query request to the determined AMF to obtain the identifiers of all UEs located in the designated area, wherein the identifier of the target UE in the user equipment inquiry request is set to all UEs, and the user equipment inquiry request carries a location information list used for indicating the designated area;
S440, after receiving the user equipment query request, the AMF reports to the NWDAF the list of identifiers of all UEs located in the designated area;
S450, the NWDAF performs data collection or monitoring on the UEs in the list of identifiers based on the received identifier list, including sending data collection requests to the determined AMF and SMF respectively;
S460, the SMF sends the session management event data of the user equipment in the designated area to the NWDAF based on the list of identifiers in the data collection request sent by the NWDAF;
S470, the AMF monitors the UEs moving into and/or moving out of the designated area according to the data collection request;
S480, when the AMF determines that there is a user equipment moving into and/or moving out of the designated area, the AMF sends to the NWDAF a report that the list of identifiers of the user equipment changes;
S490, when the list of identifiers changes, the NWDAF may request for data collection or monitoring on the user equipment that has newly moved into the designated area, and stop data collection or monitoring on the user equipment that has moved out of the designated area.

Through the process of the above embodiment, the NWDAF queries the NRF for the AMF serving the designated area; then the NWDAF sends a user equipment query request to the AMF, so that based on the user equipment query request, the AMF feeds back with the list of identifiers of the UEs in the designated area, in this way, based on the determined identifier list, the NWDAF can send data collection requests directly to 5GC NFs such as AMF/SMF.

Using the method of obtaining user equipment behavior data according to some embodiments of the present disclosure, by determining a network function entity based on a designated area, a data collection request can be sent to the network function entity in the designated area for requesting the behavior data of all UEs in the designated service area, so as to solve the problem in the related art that it is impossible to monitor all UEs in a designated area.

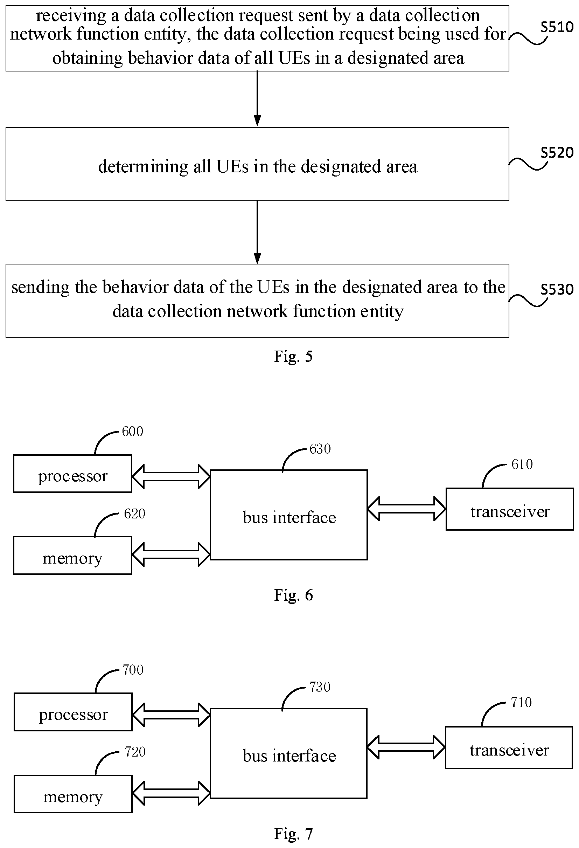

An unclaimed example of the present disclosure further provides a method of sending user equipment behavior data, which is performed by a network function entity. As shown in Fig. 5, the method includes following steps:
S510, receiving a data collection request sent by a data collection network function entity, the data collection request being used for obtaining behavior data of all UEs in a designated area;
S520, determining all UEs in the designated area;
S530, sending the behavior data of the UEs in the designated area to the data collection network function entity.

Using the method of sending user equipment behavior data according to some embodiments of the present disclosure, the network function entity determines all the UEs in the designated area based on the data collection request sent by the data collection network function entity, and sends the behavior data of all the UEs in the designated area to the data collection network function entity, so as to solve the problem in the related art that it is impossible to monitor all UEs in a designated area.

In some embodiments of the present disclosure, optionally, the data collection network function entity is a network data analytics function (NWDAF) entity in the 3GPP.

Optionally, the designated area is any area in the operator's network.

Further, optionally, in step S510, the data collection request includes a location information list used for indicating a designated area, and the requested UEs are indicated as all UEs in the designated area.

In the step S530, the sending the behavior data of the UEs in the designated area to the data collection network function entity includes:
sending behavior data of each user equipment in the designated area to the data collection network function entity.

In some embodiments of the present disclosure, optionally, the network function entity is an access and mobility management function (AMF) entity, and the method further includes:
receiving a user equipment query request sent by the data collection network function entity, the user equipment query request being used for obtaining a list of identifiers of the UEs in the designated area;
sending the list of identifiers to the data collection network function entity; wherein the data collection request includes the list of identifiers.

Optionally, after sending the list of identifiers to the data collection network function entity, the method further includes:
sending, to the data collection network function entity, report information of the list of identifiers after UE moves into and/or moves out of the designated area.

Optionally, in the step S530, after sending the behavior data of the UEs in the designated area to the data collection network function entity, the method further includes:
monitoring UEs moving into and/or moving out of the designated area;
sending to the data collection network function entity behavior data of the UEs moving into and/or moving out of the designated area.

In an implementation of the present disclosure, the behavior data is mobility event data, and the target network function entity is an AMF entity; or
the behavior data is session management event data, and the target network function entity is a session management function (SMF) entity.

Optionally, when the behavior data is session management event data and the target network function entity is a session management function (SMF) entity, the method further includes:
subscribing to the AMF entity serving the designated area to get information of UEs in the designated area;
receiving the information of UEs reported by the AMF entity.

An unclaimed example of the present disclosure further provides a network device. As shown in Fig. 6, the network device includes: a processor 600; a memory 620 connected to the processor 600 through a bus interface 630, and a transceiver 610 connected to the processor 600 through the bus interface. The memory 620 is configured to store programs and data used by the processor when performing operations; the transceiver 610 is configured to send data information or pilot and receive the uplink control channel; the processor 600 is configured to read the program in the memory 620, and perform the following process:
determining a target network function entity serving a designated area;
sending a data collection request to the target network function entity, the data collection request being used for obtaining behavior data of all UEs in the designated area;
receiving the behavior data of the UEs in the designated area sent by the target network function entity.

Optionally, in the network device, after determining the target network function entity serving the designated area, the processor 600 is further configured for:
sending a user equipment query request to an access and mobility management function (AMF) entity serving the designated area, the user equipment query request being used for obtaining a list of identifiers of the UEs in the designated area;
obtaining, from the AMF, the list of identifiers;
wherein, in the sending the data collection request to the target network function entity, the data collection request includes the list of identifiers.

Optionally, in the network device, after obtaining, from the AMF entity, the list of identifiers, the processor 600 is further configured for:
receiving a report sent by the AMF entity after it is determined by the AMF entity that the list of identifiers of the UEs in the designated area has changed.

Optionally, in the network device, the processor 600 determining the target network function entity serving the designated area includes:
sending a network function query request to a network repository function (NRF) entity, wherein the network function query request is used for querying the target network function entity serving the designated area;
receiving a response message sent by the NRF entity, the response message being used for indicating the target network function entity.

Optionally, in the network device, the behavior data is mobility event data, and the target network function entity is an AMF entity; or
the behavior data is session management event data, and the target network function entity is a session management function (SMF) entity.

Optionally, in the network device, the processor 600 receiving the behavior data of the UEs in the designated area sent by the target network function entity includes:
receiving separately the behavior data of each user equipment in the designated area sent by the target network function entity.

Optionally, in the network device, the processor 600 is further configured for:
receiving behavior data of UEs moving into and/or moving out of the designated area sent by the target network function entity;
determining the behavior data of all UEs in the designated area.

Additionally, in Fig. 6, the bus architecture may include any number of interconnected buses and bridges, specifically various circuits such as one or more processors represented by processor 600 and the memory represented by memory 620 are connected together. The bus architecture may also connect various other circuits such as peripheral devices, voltage regulators, and power management circuits, which are all known in the field, and therefore, will not be further described herein. The bus interface provides the interface. The transceiver 610 may be multiple elements, that is, a transmitter and a receiver, and provides units for communicating with various other devices on the transmission medium. The processor 600 is responsible for managing the bus architecture and general processing, and the memory 620 may be configured to store data used by the processor 600 when performing operations.

An unclaimed example of the present disclosure further provides a network device. As shown in Fig. 7, the network device includes: a processor 700; a memory 720 connected to the processor 700 through a bus interface 730, and a transceiver 710 connected to the processor 700 through the bus interface; the memory 720 is configured to store programs and data used by the processor when performing operations; the transceiver 710 is configured to send data information or pilot, and receive the uplink control channel; the processor 700 is configured to read the program in the memory 720, and perform the following process:
receiving a data collection request sent by a data collection network function entity, the data collection request being used for obtaining behavior data of all UEs in a designated area;
determining all UEs in the designated area;
sending the behavior data of the UEs in the designated area to the data collection network function entity.

Optionally, in the network device, the network function entity is an access and mobility management function (AMF) entity, the processor 700 is further configured for:
receiving a user equipment query request sent by the data collection network function entity, the user equipment query request being used for obtaining a list of identifiers of the UEs in the designated area;
sending the list of identifiers to the data collection network function entity; wherein the data collection request includes the list of identifiers.

Optionally, in the network device, after sending the list of identifiers to the data collection network function entity, the processor 700 is further configured for:
sending, to the data collection network function entity, report information of the list of identifiers after UE moves into and/or moves out of the designated area.

Optionally, in the network device, after sending the behavior data of the UEs in the designated area to the data collection network function entity, the processor 700 is further configured for:
monitoring UEs moving into and/or moving out of the designated area;
sending behavior data of the UEs moving into and/or moving out of the designated area to the data collection network function entity.

Optionally, in the network device, the behavior data is mobility event data, and the target network function entity is an AMF entity; or
the behavior data is session management event data, and the target network function entity is a session management function (SMF) entity.

Optionally, in the network device, when the behavior data is session management event data and the target network function entity is a session management function (SMF) entity, the processor 700 is further configured for:
subscribing to the AMF entity serving the designated area to get information of UEs in the designated area;
receiving the information of UEs reported by the AMF entity.

Optionally, in the network device, the data collection request includes a location information list used for indicating the designated area.

Additionally, in Fig. 7, the bus architecture may include any number of interconnected buses and bridges, specifically various circuits such as one or more processors represented by processor 700 and the memory represented by memory 720 are connected together. The bus architecture may also connect various other circuits, such as peripheral devices, voltage regulators, and power management circuits, etc., which are all known in the field, and therefore, will not be further described herein. The bus interface provides the interface. The transceiver 710 may be multiple elements, that is, a transmitter and a receiver, and provide units for communicating with various other devices on the transmission medium. The processor 700 is responsible for managing the bus architecture and general processing, and the memory 720 may be configured to store data used by the processor 700 when performing operations.

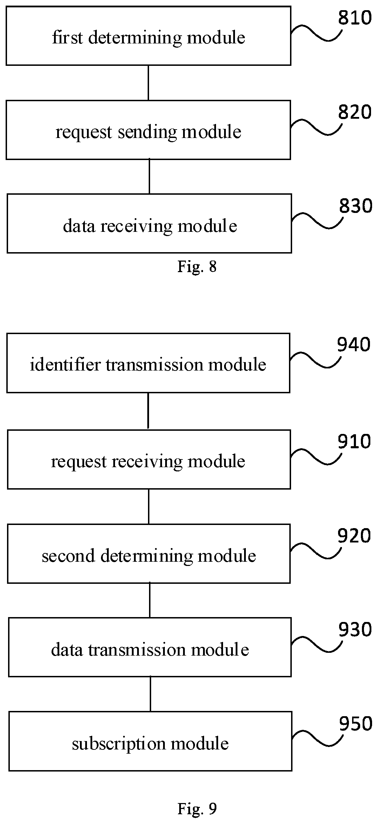

An embodiments of the present disclosure further provides an apparatus for obtaining user equipment behavior data, which is performed by a data collection network function entity. As shown in Fig. 8, the apparatus includes:
a first determining module 810, configured to determine a target network function entity serving a designated area;
a request sending module 820, configured to send a data collection request to the target network function entity, the data collection request being used to request behavior data of all UEs in the designated area;
a data receiving module 830, configured to receive the behavior data of the UEs in the designated area sent by the target network function entity.

Optionally, in the apparatus of obtaining user equipment behavior data, after determining the target network function entity in the designated area, the first determining module 810 is further configured to:
send a user equipment query request to an access and mobility management function (AMF) entity serving the designated area, the user equipment query request being used for obtaining a list of identifiers of the UEs in the designated area;
obtain, from the AMF entity, the list of identifiers;
wherein, in the step of sending the data collection request to the target network function entity performed by the request sending module 820, the data collection request includes the list of identifiers.

Optionally, in the apparatus of obtaining user equipment behavior data, after obtaining, from the AMF entity, the list of identifiers, the first determining module 810 is further configured to:
receive a report sent by the AMF entity after it is determined by the AMF entity that the list of identifiers of the UEs in the designated area has changed.

Optionally, in the apparatus of obtaining user equipment behavior data, the first determining module 810 determining a target network function entity serving a designated area includes:
sending a network function query request to the network repository function (NRF) entity, wherein the network function query request is used for querying the target network function entity serving the designated area;
receiving a response message sent by the NRF entity, the response message being used for indicating the target network function entity.

Optionally, in the apparatus of obtaining user equipment behavior data, the behavior data is mobility event data, and the target network function entity is an AMF entity; or
the behavior data is session management event data, and the target network function entity is a session management function (SMF) entity.

Optionally, in the apparatus of obtaining user equipment behavior data, the data receiving module 830 receiving the behavior data of the UEs in the designated area sent by the target network function entity includes:
receiving separately the behavior data of each user equipment in the designated area sent by the target network function entity.

Optionally, in the apparatus of obtaining user equipment behavior data, the data receiving module 830 is further configured to:
receive behavior data of UEs moving into and/or moving out of the designated area sent by the target network function entity;
determine the behavior data of all UEs in the designated area.

An unclaimed example of the present disclosure further provides an apparatus of sending user equipment behavior data, which is performed by a network function entity. As shown in Fig. 9, the apparatus includes:
a request receiving module 910, configured to receive a data collection request sent by a data collection network function entity, the data collection request being used for obtaining behavior data of all UEs in a designated area;
a second determining module 920, configured to determine all UEs in the designated area;
a data transmission module 930, configured to send the behavior data of the UEs in the designated area to the data collection network function entity.

Optionally, the network function entity is an access and mobility management function (AMF) entity, the apparatus of sending user equipment behavior data further includes an identifier transmission module 940 configured to:
receive a user equipment query request sent by the data collection network function entity, the user equipment query request being used for obtaining a list of identifiers of the UEs in the designated area;
send the list of identifiers to the data collection network function entity; wherein the data collection request includes the list of identifiers.

Optionally, in the apparatus of sending user equipment behavior data, after sending the list of identifiers to the data collection network function entity, the identifier transmission module 940 is further configured to:
send, to the data collection network function entity, report information of the list of identifiers after UE moves into and/or moves out of the designated area.

Optionally, in the apparatus of sending user equipment behavior data, after sending the behavior data of the UEs in the designated area to the data collection network function entity, the data transmission module 930 is further configured to:
monitor UEs moving into and/or moving out of the designated area; and
send, to the data collection network function entity, behavior data of the UEs moving into and/or moving out of the designated area.

Optionally, in the apparatus of sending user equipment behavior data, the behavior data is mobility event data, and the target network function entity is an AMF entity; or
the behavior data is session management event data, and the target network function entity is a session management function (SMF) entity.

Optionally, in case that the behavior data is session management event data and the target network function entity is a session management function (SMF) entity, the apparatus of sending user equipment behavior data further includes a subscription module 950 configured to:
subscribe to the AMF entity serving the designated area to get information of UEs in the designated area; and
receive the information of UEs reported by the AMF entity.

Optionally, in the apparatus of sending user equipment behavior data, the data collection request includes a location information list used for indicating the designated area.

Unclaimed examples of the present disclosure further provide a processor readable storage medium storing thereon a program, wherein the program is configured to be executed by a processor to implement the process in any embodiment of the method of obtaining user equipment behavior data as described above, or, implement the process in any embodiment of the method of sending user equipment behavior data as described above, and the same technical effects can be achieved. To avoid repetition, a detailed description thereof is omitted here.

The processor readable storage medium includes: read-only memory (ROM), random access memory (RAM), magnetic disk, or optical disc, etc.

It can be understood that the embodiments described in the present disclosure may be implemented by hardware, software, firmware, middleware, microcode, or a combination thereof. For hardware implementation, module, unit, submodule, subunit and the like can be implemented in one or more application-specific integrated circuits (ASICs), digital signal processors (DSPs), digital signal processing devices (DSP Devices, DSPDs), programmable logic devices (PLDs), field-programmable gate arrays (FPGAs), general-purpose processors, controllers, microcontrollers, microprocessors, other electronic units for performing the functions described in this disclosure, or a combination thereof.

It is noted that, herein, the terms "comprising", "including" or any other variation thereof are intended to encompass non-exclusive inclusion, such that a process, method, article or apparatus comprising a series of elements includes not only those elements, but also other elements not expressly listed, or which are inherent to such a process, method, article or apparatus. Without further limitation, the inclusion of an element defined by the phrase "comprising a..." does not preclude the existence of another identical element in the process, method, article or apparatus that includes the element.

From the description of the above implementation, those skilled in the art can clearly understand that the method of the above embodiment can be implemented by means of software plus a necessary general-purpose hardware platform, and of course can also be implemented by hardware, but in many cases the former is better implementation. Based on such an understanding, essential parts, or parts contributing to the related art, of the technical solution of the present disclosure may be implemented in form of a software product. The software product is stored in a storage medium (e.g., an ROM/RAM, a magnetic disk and an optical disc) and includes several instructions configured to be executed by a terminal (such as a handset, a computer, a server, an air conditioner or a network device) to perform the methods according to the embodiments of the present disclosure.

The embodiments of the present disclosure are described above with reference to the accompanying drawings. However, the present disclosure is not limited to the foregoing specific implementations. The foregoing specific implementations are merely illustrative rather than limitative. In light of the teachings of the present disclosure, a person of ordinary skill in the art may further make various forms without departing from the present disclosure and the scope of the claims, as long as they fall within the terms of the appended claims.

The above are optional implementations of the present disclosure. It should be pointed out that for a person skilled in the art, several improvements and modifications can be made without departing from the principles of the present disclosure. These improvements and modifications should also fall within the scope of the present disclosure.

## Claims

1. A method of obtaining user equipment, UE, behavior data, performed by a data collection network function entity, **characterized by** comprising:
determining a target network function entity serving a designated area;
sending a data collection request to the target network function entity, the data collection request being used for obtaining behavior data of all UEs in the designated area; and
receiving the behavior data of the UEs in the designated area sent by the target network function entity;
wherein, after the determining the target network function entity serving the designated area, the method further comprises:
sending a query request to an access and mobility management function, AMF, entity serving the designated area, the query request being used for obtaining a list of identifiers of the UEs in the designated area; and
obtaining, from the AMF entity, the list of identifiers;
wherein, in the sending the data collection request to the target network function entity, the data collection request comprises the list of identifiers.

2. The method of obtaining the user equipment behavior data according to claim 1, wherein, after the obtaining, from the AMF entity, the list of identifiers, the method further comprises:
receiving a report sent by the AMF entity after it is determined by the AMF entity that the list of identifiers of the UEs in the designated area has changed.

3. The method of obtaining the user equipment behavior data according to claim 1, wherein the determining the target network function entity serving the designated area comprises:
sending a network function query request to a network repository function, NRF, entity, wherein the network function query request is used for querying the target network function entity serving the designated area;
receiving a response message sent by the NRF entity, the response message being used for indicating the target network function entity;
and/or,
wherein,
the behavior data is mobility event data, and the target network function entity is the AMF entity; or the behavior data is session management event data, and the target network function entity is a session management function, SMF, entity.

4. The method of obtaining the user equipment behavior data according to claim 1, wherein the receiving the behavior data of the UEs in the designated area sent by the target network function entity comprises:
receiving separately the behavior data of each user equipment in the designated area sent by the target network function entity;
wherein the method further comprises:
receiving behavior data of UEs moving into and/or moving out of the designated area sent by the target network function entity;
determining the behavior data of all UEs in the designated area.

5. An apparatus of obtaining user equipment behavior data for a data collection network function entity, **characterized by** comprising:
a first determining module, configured to determine a target network function entity serving a designated area;
a request sending module, configured to send a data collection request to the target network function entity, the data collection request being used for obtaining behavior data of all UEs in the designated area; and
a data receiving module, configured to receive the behavior data of the UEs in the designated area sent by the target network function entity;
wherein, after determining the target network function entity serving the designated area, the first determining module is further configured to:
send a query request to an access and mobility management function, AMF, entity serving the designated area, the query request being used for obtaining a list of identifiers of the UEs in the designated area;
obtain, from the AMF entity, the list of identifiers;
wherein, in the step of sending the data collection request to the target network function entity performed by the request sending module, the data collection request comprises the list of identifiers.

6. The apparatus according to claim 5, wherein the first determining module determining the target network function entity serving the designated area comprises:
sending a network function query request to a network repository function, NRF, entity, wherein the network function query request is used for querying the target network function entity serving the designated area;
receiving a response message sent by the NRF entity, the response message being used for indicating the target network function entity;
and/or,
wherein,
the behavior data is mobility event data, and the target network function entity is the AMF entity; or the behavior data is session management event data, and the target network function entity is a session management function, SMF, entity.

## Patentansprüche

1. Verfahren zum Erhalten von Endgerät-, UE, Verhaltensdaten, das von einer Datenerfassungsnetzwerkfunktionseinheit durchgeführt wird, **dadurch gekennzeichnet, dass** es umfasst:
Bestimmen einer Ziel-Netzwerkfunktionseinheit, die als ein bestimmter Bereich dient;
Senden einer Datenerfassungsanfrage an die Ziel-Netzwerkfunktionseinheit, wobei die Datenerfassungsanfrage dazu verwendet wird, um Verhaltensdaten sämtlicher UEs in dem bestimmten Bereich zu erhalten; und
Empfangen der Verhaltensdaten der UEs in dem bestimmten Bereich, die von der Ziel-Netzwerkfunktionseinheit gesendet werden;
wobei, nachdem bestimmt wurde, dass die Ziel-Netzwerkfunktionseinheit als bestimmter Bereich dient, das Verfahren ferner umfasst:
Senden einer Abfrageanfrage an eine Zugangs- und Mobilitätsmanagementfunktions-, AMF, Einheit die als bestimmter Bereich dient, wobei die Abfrageanfrage verwendet wird, um eine Liste von Kennungen der UEs in dem bestimmten Bereich zu erhalten; und
Erhalten, von der AMF-Einheit, der Liste von Kennungen;
wobei beim Senden der Datenerfassungsanfrage an die Ziel-Netzwerkfunktionseinheit, die Datenerfassungsanfrage die Liste von Kennungen umfasst.

2. Verfahren zum Erhalten von Endgerät-Verhaltensdaten nach Anspruch 1, wobei das Verfahren nach dem Erhalten der Liste von Kennungen von der AMF-Einheit ferner umfasst:
Empfangen eines von der AMF-Einheit gesendeten Berichts, nachdem von der AMF-Einheit bestimmt wurde, dass sich die Liste von Kennungen der UEs in dem bestimmten Bereich geändert hat.

3. Verfahren zum Erhalten von Endgerät-Verhaltensdaten nach Anspruch 1, wobei das Bestimmen der Ziel-Netzwerkfunktionseinheit, die als bestimmter Bereich dient, umfasst:
Senden einer Netzwerkfunktions-Abfrageanfrage an eine Netzwerk-Repository-Funktions-, NRF, Einheit, wobei die Netzwerkfunktionsabfrageanfrage verwendet wird, um die Ziel-Netzwerkfunktionseinheit abzufragen, die als bestimmter Bereich dient;
Empfangen einer von der NRF-Einheit gesendeten Antwortnachricht, wobei die Antwortnachricht verwendet wird, um die Ziel-Netzwerkfunktionseinheit anzuzeigen;
und/oder
wobei
die Verhaltensdaten Mobilitätsereignisdaten sind, und die Ziel-Netzwerkfunktionseinheit die AMF-Einheit ist; oder die Verhaltensdaten die Session-Management-Ereignisdaten sind, und die Ziel-Netzwerkfunktionseinheit eine Session-Managementfunktions-, SMF, Einheit ist.

4. Verhalten zum Erhalten von Endgerät-Verhaltensdaten nach Anspruch 1, wobei das Empfangen der Verhaltensdaten der UEs in dem bestimmten Bereich, die von der Ziel-Netzwerkfunktionseinheit gesendet werden, umfasst:
separates Empfangen der Verhaltensdaten jedes Endgeräts in dem bestimmten Bereich, die von der Ziel-Netzwerkfunktionseinheit gesendet wurden;
wobei das Verfahren ferner umfasst:
Empfangen der von der Ziel-Netzwerkfunktionseinheit gesendeten Verhaltensdaten von UEs, die sich in und/oder aus dem bestimmten Bereich bewegen,
Bestimmen der Verhaltensdaten sämtlicher UEs in dem bestimmten Bereich.

5. Vorrichtung zum Erhalten von Endgerät-Verhaltensdaten für eine Datenerfassungsnetzwerkfunktionseinheit, **dadurch gekennzeichnet, dass** sie aufweist:
ein erstes Bestimmungsmodul, das dazu ausgebildet ist, eine Ziel-Netzwerkfunktionseinheit zu bestimmen, die als ein bestimmter Bereich dient;
ein Anfragesendemodul, das dazu ausgebildet, eine Datenerfassungsanfrage an die Ziel-Netzwerkfunktionseinheit zu senden, wobei die Datenerfassungsanfrage verwendet wird, um Verhaltensdaten sämtlicher UEs in dem bestimmten Bereich zu erhalten; und
ein Datenempfangsmodul, das dazu ausgebildet ist, die Verhaltensdaten der UEs in dem bestimmten Bereich zu empfangen, die von der Ziel-Netzwerkfunktionseinheit gesendet wurden;
wobei das erste Bestimmungsmodul nach dem Bestimmten der Ziel-Netzwerkfunktionseinheit, die als bestimmter Bereich dient, ferner für Folgendes ausgebildet ist:
Senden einer Abfrageanfrage an eine Zugangs- und Mobilitätsmanagementfunktions-, AMF, Einheit, die als bestimmter Bereich dient, wobei die Abfrageanfrage verwendet wird, um eine Liste von Kennungen der UEs in dem bestimmten Bereich zu erhalten;
Erhalten, von der AMF-Liste, der Liste von Kennungen;
wobei in dem Schritt des Sendens der Datenerfassungsanfrage an die Ziel-Netzwerkfunktionseinheit, der von dem Anfragesendemodul durchgeführt wird, die Datenerfassungsanfrage die Liste von Kennungen umfasst.

6. Vorrichtung nach Anspruch 5, wobei das Bestimmen der Ziel-Netzwerkfunktionseinheit, die als bestimmter Bereich dient, durch das erste Bestimmungsmodul umfasst:
Senden einer Netzwerkfunktionsabfrageanfrage an eine Netzwerk-Repository-Funktions-, NRF, Einheit, wobei die Netzwerkfunktionsabfrageanfrage verwendet wird, um die Ziel-Netzwerkfunktionseinheit abzufragen, die als bestimmter Bereich dient;
Empfangen einer von der NRF-Einheit gesendeten Antwortnachricht, wobei die Antwortnachricht verwendet wird, um die Ziel-Netzwerkfunktionseinheit anzuzeigen;
und/oder
wobei
die Verhaltensdaten Mobilitätsereignisdaten sind, und die Ziel-Netzwerkfunktionseinheit die AMF-Einheit ist; oder die Verhaltensdaten die Session-Management-Ereignisdaten sind, und die Ziel-Netzwerkfunktionseinheit eine Session-Managementfunktions-, SMF, Einheit ist.

## Revendications

1. Procédé d'obtention de données de comportement d'équipement utilisateur, UE, mis en œuvre par une entité de fonction réseau de collecte de données, **caractérisé en ce qu'**il comprend :
la détermination d'une entité de fonction réseau cible desservant une zone désignée ;
l'envoi d'une demande de collecte de données à l'entité de fonction réseau cible, la demande de collecte de données étant utilisée pour obtenir des données de comportement de tous les UE dans la zone désignée ; et
la réception des données de comportement des UE dans la zone désignée, envoyées par l'entité de fonction réseau cible ;
dans lequel, après la détermination de l'entité de fonction réseau cible desservant la zone désignée, le procédé comprend en outre :
l'envoi d'une demande de requête à une entité de fonction de gestion d'accès et de mobilité, AMF desservant la zone désignée, la demande de requête étant utilisée pour obtenir une liste d'identificateurs des UE dans la zone désignée ; et
l'obtention, auprès de l'entité AMF, de la liste d'identificateurs ;
dans lequel, dans l'envoi de la demande de collecte de données à l'entité de fonction réseau cible, la demande de collecte de données comprend la liste d'identificateurs.

2. Procédé d'obtention des données de comportement d'équipement utilisateur selon la revendication 1, dans lequel, après l'obtention, auprès de l'entité AMF, de la liste d'identificateurs, le procédé comprend en outre :
la réception d'un rapport envoyé par l'entité AMF après qu'il a été déterminé par l'entité AMF que la liste d'identificateurs des UE dans la zone désignée a changé.

3. Procédé d'obtention des données de comportement d'équipement utilisateur selon la revendication 1, dans lequel la détermination de l'entité de fonction réseau cible desservant la zone désignée comprend :
l'envoi d'une demande de requête de fonction réseau à une entité de fonction de référentiel réseau, NRF, dans lequel la demande de requête de fonction réseau est utilisée pour interroger l'entité de fonction réseau cible desservant la zone désignée ;
la réception d'un message de réponse envoyé par l'entité NRF, le message de réponse étant utilisé pour indiquer l'entité de fonction réseau cible ;
et/ou,
dans lequel,
les données de comportement sont des données d'événement de mobilité, et l'entité de fonction réseau cible est l'entité AMF ; ou les données de comportement sont des données d'événement de gestion de session, et l'entité de fonction réseau cible est une entité de fonction de gestion de session, SMF.

4. Procédé d'obtention des données de comportement d'équipement utilisateur selon la revendication 1, dans lequel la réception des données de comportement des UE dans la zone désignée, envoyées par l'entité de fonction réseau cible comprend :
la réception séparée des données de comportement de chaque équipement utilisateur dans la zone désignée, envoyées par l'entité de fonction réseau cible ;
dans lequel le procédé comprend en outre :
la réception de données de comportement d'UE entrant dans et/ou sortant de la zone désignée, envoyées par l'entité de fonction réseau cible ;
la détermination des données de comportement de tous les UE dans la zone désignée.

5. Appareil d'obtention de données de comportement d'équipement utilisateur pour une entité de fonction réseau de collecte de données, **caractérisé en ce qu'**il comprend :
un premier module de détermination, configuré pour déterminer une entité de fonction réseau cible desservant une zone désignée ;
un module d'envoi de demande, configuré pour envoyer une demande de collecte de données à l'entité de fonction réseau cible, la demande de collecte de données étant utilisée pour obtenir des données de comportement de tous les UE dans la zone désignée ; et
un module de réception de données, configuré pour recevoir les données de comportement des UE dans la zone désignée, envoyées par l'entité de fonction réseau cible ;
dans lequel, après détermination de l'entité de fonction réseau cible desservant la zone désignée, le premier module de détermination est configuré en outre pour :
envoyer une demande de requête à une entité de fonction de gestion d'accès et de mobilité, AMF desservant la zone désignée, la demande de requête étant utilisée pour obtenir une liste d'identificateurs des UE dans la zone désignée ;
obtenir, auprès de l'entité AMF, la liste d'identificateurs ;
dans lequel, dans l'étape d'envoi de la demande de collecte de données à l'entité de fonction réseau cible mise en œuvre par le module d'envoi de demande, la demande de collecte de données comprend la liste d'identificateurs.

6. Appareil selon la revendication 5, dans lequel le premier module de détermination déterminant l'entité de fonction réseau cible desservant la zone désignée comprend :
l'envoi d'une demande de requête de fonction réseau à une entité de fonction de référentiel réseau, NRF, dans lequel la demande de requête de fonction réseau est utilisée pour interroger l'entité de fonction réseau cible desservant la zone désignée ;
la réception d'un message de réponse envoyé par l'entité NRF, le message de réponse étant utilisé pour indiquer l'entité de fonction réseau cible ;
et/ou,
dans lequel,
les données de comportement sont des données d'événement de mobilité, et l'entité de fonction réseau cible est l'entité AMF ; ou les données de comportement sont des données d'événement de gestion de session, et l'entité de fonction réseau cible est une entité de fonction de gestion de session, SMF.
